# EUROPÄISCHE PATENTSCHRIFT

(11) **EP 2 761 792 B1**
(45) Veröffentlichungstag und Bekanntmachung des Hinweises auf die Patenterteilung: **05.10.2016**
(21) Anmeldenummer: 12748415.2
(22) Anmeldetag: 08.08.2012
(51) Int. Cl.: H04H 20/00, H04L 12/24

(54) **KOPFSTATION MIT REDUNDANZ UND ZUGEHÖRIGES VERFAHREN**
HEADEND STATION HAVING REDUNDANCY AND ASSOCIATED METHOD
TÊTE DE STATION AVEC REDONDANCE ET PROCÉDÉ ASSOCIÉ

(30) Priorität: 30.09.2011 DE 102011083816
(43) Veröffentlichungstag der Anmeldung: 06.08.2014
(73) Patentinhaber: Rohde & Schwarz GmbH & Co. KG, 81671 München (DE)
(72) Erfinder: HEIDENREICH, René, 10115 Berlin (DE); GÖRIG, Torsten, 15566 Schöneiche bei Berlin (DE)
(74) Vertreter: Körfer, Thomas
(86) Internationale Anmeldenummer: PCT/EP2012/065501
(87) Internationale Veröffentlichungsnummer: WO 2013/045160

(56) Entgegenhaltungen:
- EP-A1- 2 282 451
- DE-A1- 10 011 267
- US-A1- 2006 088 023

## Beschreibung

Die Erfindung betrifft eine Kopfstation (engl. Headstation) mit Redundanz und ein zugehöriges Betriebs-Verfahren.

Redundant ausgelegte Kommunikationssysteme bestehen typischerweise aus zwei Kommunikationssystemen, die gleichzeitig und unabhängig voneinander jeweils einen Ausgangsdatenstrom erzeugen. Aus der DE 100 11 267 A1 sind redundante Kommunikationsmodule bekannt, bei denen die Entscheidung, welcher Ausgangsdatenstrom weitergeleitet wird, auf der Basis der zwischen den beiden Kommunikationsmodulen ausgetauschten Zustands-Daten entschieden wird.

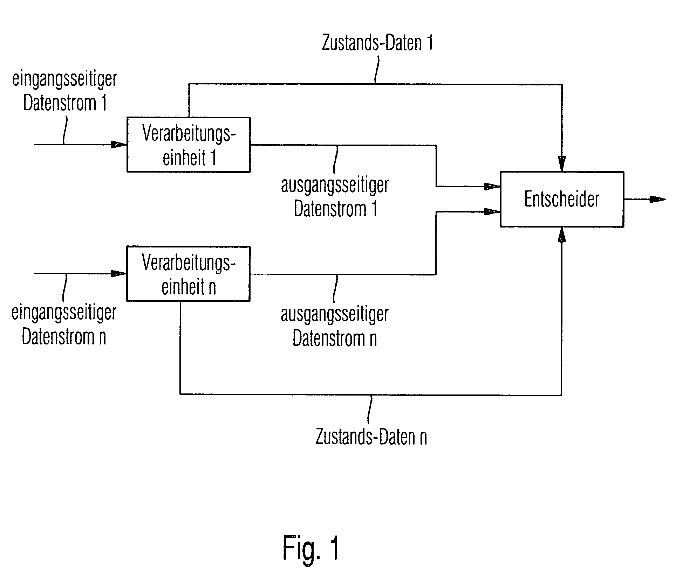

In einer in Fig. 1 schematisch dargestellten Anordnung eines redundant ausgelegten Kommunikationssystems, an der die Problematik erläutert wird, die jedoch nach Wissen der Anmelderin nicht Stand der Technik ist, werden die von den beiden Kommunikationssystemen jeweils erzeugten Ausgangsdatenströme an einen Entscheider übertragen. Der Entscheider entscheidet anhand der beiden Ausgangsdatenströme und anhand der in den beiden Kommunikationssystemen jeweils erzeugten und dem Entscheider zugeführten Zustands-Daten, welcher der beiden Ausgangsdatenströme an die Übertragungsstrecke gesendet werden.

Fällt bei dieser Anordnung eines redundant ausgelegten Kommunikationssystems der Entscheider aus, so wird nachteilig kein Ausgangsdatenstrom über die Übertragungsstrecke übertragen. Der Entscheider wird somit zur kritischen Komponente im redundant ausgelegten Kommunikationssystem (so genannter Single-Point-of-Failure, deutsch: Ein-Punkt-Fehler). Sind die beiden Ausgangsdatenströme nicht zueinander synchronisiert, kann zusätzlich nachteilig im Entscheider keine phasenkohärente Umschaltung zwischen den beiden Ausgangsdatenströmen zur Weiterleitung eines lückenlosen Ausgangsdatenstroms an die Übertragungsstrecke durchgeführt werden.

Die EP 2 282 451 A1 offenbart eine Kopfstation mit mehreren über ein Bussystem verbundenen Datenverarbeitungs-Einheiten, die bei Ausfall einer Datenverarbeitungs-Einheit die durchzuführenden Verarbeitungsfunktionen der ausgefallenen Datenverarbeitungs-Einheit übernehmen.

Die US 2006/0088023 A1 zeigt eine Kopfstation mit einer einzigen Verarbeitungs-Einheit, nicht jedoch eine Kopfstation mit mehreren Verarbeitungseinheiten und einem Entscheider.

Aufgabe der Erfindung ist es deshalb, eine redundant ausgelegte Kopfstation in einem Kommunikationssystem, insbesondere in einem Rundfunkübertragungssystem, insbesondere mit Gleichwellenbetrieb, derart weiterzuentwickeln, dass die obig genannten Nachteile nicht mehr auftreten.

Die Aufgabe wird durch die erfindungsgemäße Kopfstation mit den Merkmalen des Patentanspruchs 1 und durch das zugehörige erfindungsgemäße Verfahren mit den Merkmalen des Patentanspruchs 14 gelöst. Vorteilhafte technische Erweiterungen sind in den jeweils abhängigen Patentansprüchen aufgeführt.

In einer erfindungsgemäßen Kopfstation mit Redundanz sind mehrere identische Verarbeitungseinheiten vorgesehen, die jeweils von mindestens einem identischen eingangsseitigen Datenstrom versorgt werden. In jeder Verarbeitungseinheit wird jeweils ein ausgangsseitiger Datenstrom mittels Durchführung mehrerer Verarbeitungsschritte - beispielsweise Kodierung, Multiplexen, Datenformatierung usw. - aus dem mindestens einen eingangsseitigen Datenstrom erzeugt. Die Ausgänge jeder Verarbeitungseinheit sind über ein ausgangsseitiges Bussystem miteinander verbunden. Über das ausgangsseitige Bussystem werden zwischen den einzelnen Verarbeitungseinheiten die von den einzelnen Verarbeitungseinheiten erzeugten ausgangsseitigen Datenströme und Zustands-Daten ausgetauscht. Die Zustands-Daten enthalten z.B. Informationen über die Funktionsfähigkeit der jeweiligen Verarbeitungseinheit und der Übertragungsstrecke zwischen der jeweiligen Verarbeitungseinheit und dem Sendersystem.

Zusätzlich weist die erfindungsgemäße Kopfstation zumindest zwei Entscheider auf, die ausgehend von den zwischen den einzelnen Verarbeitungseinheiten ausgetauschten ausgangsseitigen Datenströmen und Zustands-Daten für jede Verarbeitungseinheit jeweils den ausgangsseitigen Datenstrom auswählen, der auf der zugehörigen Übertragungsstrecke zwischen der jeweiligen Verarbeitungseinheit und dem Sendersystem übertragen wird.

Auf diese Weise erfolgt die Übertragung eines ausgangsseitigen Datenstroms, der aus allen von jeweils einer Verarbeitungseinheit erzeugten ausgangsseitigen Datenströmen ausgewählt wird, nicht mehr vom Entscheider zum Sendesystem. Stattdessen wird von jeder Verarbeitungseinheit entweder der von der jeweiligen Verarbeitungseinheit erzeugte ausgangsseitige Datenstrom oder der von einer anderen Verarbeitungseinheit erzeugte und über das ausgangsseitige Bussystem zur jeweiligen Verarbeitungseinheit übertragene ausgangsseitige Datenstrom über die zugeordnete Übertragungsstrecke zum Sendersystem ohne Zwischenschaltung eines Entscheiders übertragen. Das Sendersystem wählt aus allen gleichzeitig empfangenen ausgangsseitigen Datenströmen den korrekten ausgangsseitigen Datenstrom für die Übertragung über die Übertragungsstrecke zum Sendersystem aus.

Die Auswahl des von der jeweiligen Verarbeitungseinheit auf der zugehörigen Übertragungsstrecke zu übertragenden ausgangsseitigen Datenstroms erfolgt anhand der Verfügbarkeit der einzelnen ausgangsseitigen Datenströme in der jeweiligen Verarbeitungseinheit, anhand der Konformität der einzelnen ausgangsseitigen Datenströme mit den Anforderungen des verwendeten Übertragungsstandards und anhand der Zustands-Daten der jeweiligen Verarbeitungseinheit, die die Funktionsfähigkeit der jeweiligen Verarbeitungseinheit und die Funktionsfähigkeit der Übertragungsstrecke zwischen der jeweiligen Verarbeitungseinheit und dem Sendesystem signalisieren.

Um für jede Verarbeitungseinheit eine korrekte Auswahl eines über die Übertragungsstrecke zu übertragenden ausgangsseitigen Datenstroms zu garantieren, sind in der erfindungsgemäßen Kopfstation die Entscheider mittels Vorhaltung von mindestens zwei Entscheidern redundant ausgelegt. Die Identifizierung und Auswahl des jeweils korrekt funktionierenden Entscheiders - beispielsweise durch eine übergeordnete Überwachungsinstanz im Fall von zwei Entscheidern oder durch Ermittlung der ein identisches Ergebnis jeweils erzeugenden Entscheider im Fall von mindestens drei Entscheider - ist mit unterschiedlichen bekannten Verfahren möglich und wird an dieser Stelle nicht im Detail ausgeführt.

Die redundant ausgeführten Entscheider sind in einer ersten Ausführungsform der Erfindung jeweils außerhalb der einzelnen Verarbeitungseinheiten mit dem ausgangsseitigen Bussystem verbunden und treffen anhand der von jeder Verarbeitungseinheit auf das ausgangsseitige Bussystem übertragenen ausgangsseitigen Datenströme und Zustands-Daten für jede Verarbeitungseinheit jeweils eine Auswahl, welchen ausgangsseitigen Datenstrom die jeweilige Verarbeitungseinheit auf die zugehörige Übertragungsstrecke jeweils übertragen soll.

Die redundant ausgeführten Entscheider sind in einer zweiten Ausführungsform der Erfindung jeweils in einer einzigen als Master-Verarbeitungseinheit agierenden Verarbeitungseinheit integriert und treffen für die als Master-Verarbeitungseinheit agierende Verarbeitungseinheit und für alle übrigen als Slave-Verarbeitungseinheiten agierenden Verarbeitungseinheiten jeweils eine Auswahl, welchen ausgangsseitigen Datenstrom die jeweilige Verarbeitungseinheit auf die zugehörige Übertragungsstrecke jeweils übertragen soll.

Die redundant ausgeführten Entscheider sind in einer dritten Ausführungsform der Erfindung jeweils in jeder einzelnen Verarbeitungseinheit integriert und treffen jeweils für die jeweilige Verarbeitungseinheit eine Auswahl, welchen ausgangsseitigen Datenstrom die jeweilige Verarbeitungseinheit auf die zugehörige Übertragungsstrecke jeweils übertragen soll.

Um eine sinnvolle Auswahl des auf der Übertragungstrecke vom Sendersystem zum Empfangssysteme zu übertragenden ausgangsseitigen Datenstroms durch das Sendersystem zu ermöglichen, werden die von den einzelnen Verarbeitungseinheiten jeweils ausgewählten ausgangsseitigen Datenströme erfindungsgemäß über eine Synchronisierungseinheit synchron auf der zugehörige Übertragungsstrecke zwischen der jeweiligen Verarbeitungseinheit und dem Sendersystem übertragen.

Um eine lückenlose und damit phasenkohärente Umschaltung zwischen den auf den einzelnen Übertragungsstrecken zwischen der jeweiligen Verarbeitungseinheit und den jeweils übertragenen ausgangsseitigen Datenströmen im Sendersystem zu garantieren, erfolgt bevorzugt in jeder Verarbeitungseinheit die Umschaltung zwischen zwei auf die zugehörige Übertragungsstrecke zu übertragenden ausgangsseitigen Datenströmen jeweils nur zu den Zeitpunkten der Übergang zwischen jeweils aufeinander folgenden Datenrahmen der synchronisiert übertragenen ausgangsseitigen Datenströme.

Da für die Auswahl des von jeder Verarbeitungseinheit auf der Übertragungsstrecke zum Sendersystem jeweils zu übertragenden ausgangsseitigen Datenstroms jeweils eine bestimmte Verarbeitungszeit erforderlich ist, erfolgt vorzugsweise in jeder Verarbeitungseinheit die Umschaltung zwischen zwei ausgangsseitigen Datenströmen jeweils zum nächsten Übergangszeitpunkt zwischen jeweils aufeinander folgenden Datenrahmen, das heißt um die Zeitdauer für die Übertragung eines Datenrahmens verzögert.

Die Versorgung der einzelnen Verarbeitungseinheiten mit identischen, von einer Datenquelle - z.B. einem Studio - jeweils erzeugten Datenströmen, die z.B. den Audio- und Videodaten von einzelnen Rundfunk-Programmen entsprechen, erfolgt über ein eingangsseitiges Bussystem.

Zur Synchronisierung der einzelnen seriell auf dem eingangsseitigen Bussystem übertragenen eingangsseitigen Datenströmen in den einzelnen Verarbeitungseinheiten werden vorzugsweise über das eingangsseitige Bussystem Synchronisierungsdaten zwischen der Datenquelle und den einzelnen Verarbeitungseinheiten übertragen. Bei den Synchronisierungsdaten kann es sich einerseits um Zeitstempel-Daten in den einzelnen Datenpaketen der einzelnen eingangsseitigen Datenströme oder um Daten zur Kennzeichnung der Reihenfolge der einzelnen Datenpakete in den einzelnen eingangsseitigen Datenströmen oder andererseits um spezifizierte, an spezifizierten Stellen in spezifizierten Datenpaketen der einzelnen eingangsseitigen Datenströme jeweils übertragene Datenbitfolgen handeln.

Um die Redundanz der erfindungsgemäßen Kopfstation zusätzlich zu erhöhen, werden das eingangsseitige Bussystem und/oder das ausgangsseitige Bussystem bevorzugt redundant ausgelegt. Die Entscheidung, welches eingangsseitige und/oder ausgangsseitige Bussystem im jeweiligen Zeitpunkt aktiviert ist, ist beliebig.

Um den von jeder Verarbeitungseinheit jeweils erzeugten ausgangsseitigen Datenstrom in einem Datenformat des auf der Übertragungsstrecke zwischen dem Sendersystem und dem Empfängersystem verwendeten Übertragungsstandards zu übertragen, ist ausgangsseitig bevorzugt eine Datenkonvertierung vorgesehen. Hierbei kann für jeden verwendeten Übertragungsstandard jeweils ein Konvertierungsbaustein oder ein alle Übertragungsstandards abdeckender Konvertierungsbausteinen Verwendung finden. Zur Erhöhung der Redundanz der erfindungsgemäßen Kopfstation kann die Datenkonvertierung auch redundant ausgeführt sein. Auch eingangsseitig kann im Bereich des eingangsseitigen Bussystems eine Datenkonvertierung vorgesehen werden.

Die erfindungsgemäße Kopfstation und das zugehörige erfindungsgemäße Verfahren werden im Folgenden anhand der Zeichnung im Detail erläutert. Die Figuren der Zeichnung zeigen:
- Fig. 1: ein Blockdiagramm eines redundant Kommunikationssystems,
- Fig. 2A: ein Blockdiagramm einer ersten Ausführungsform einer erfindungsgemäßen Kopfstation,
- Fig. 2B: ein Blockdiagramm einer zweiten Ausführungsform einer erfindungsgemäßen Kopfstation,
- Fig. 2C: ein Blockdiagramm einer dritten Ausführungsform einer erfindungsgemäßen Kopfstation und
- Fig. 3: ein Flussdiagramm eines zugehörigen erfindungsgemäßen Verfahrens.

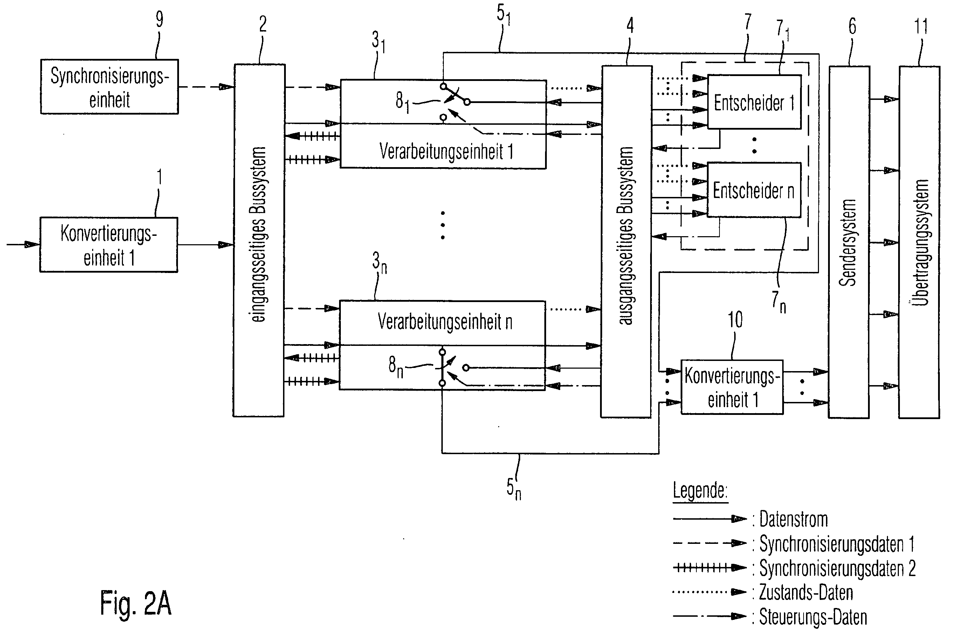

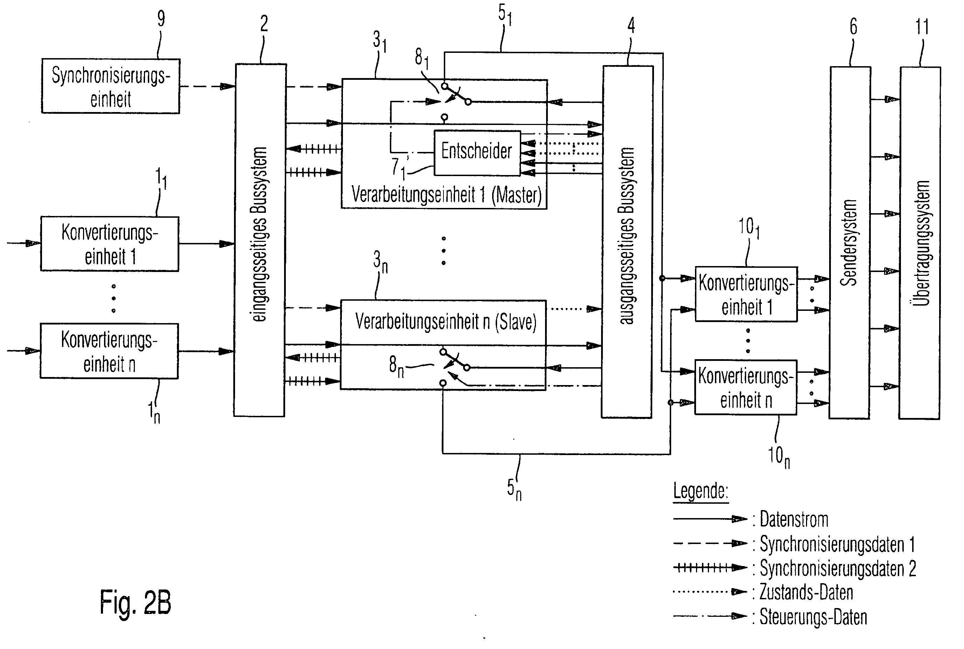

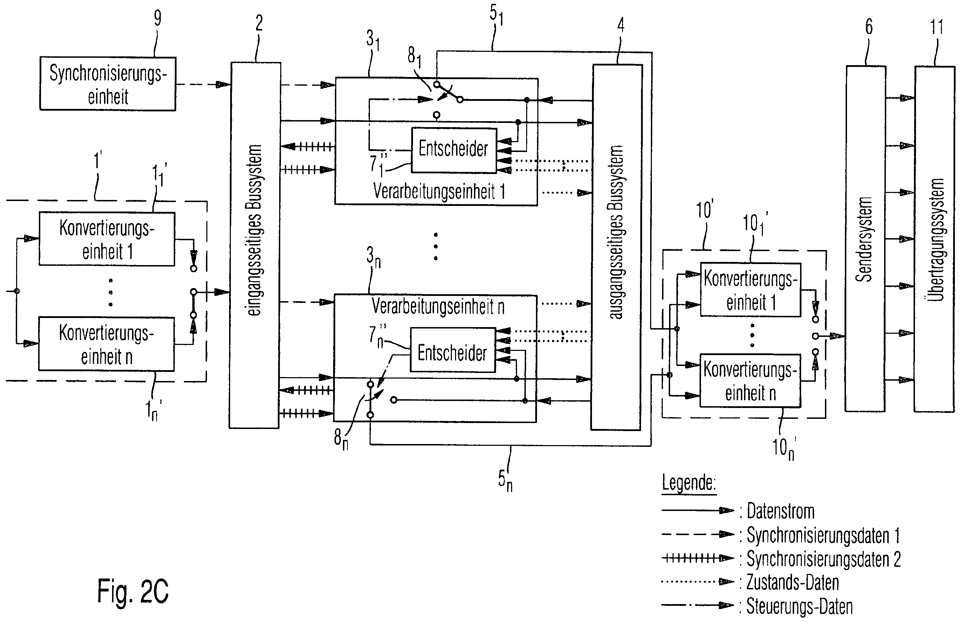

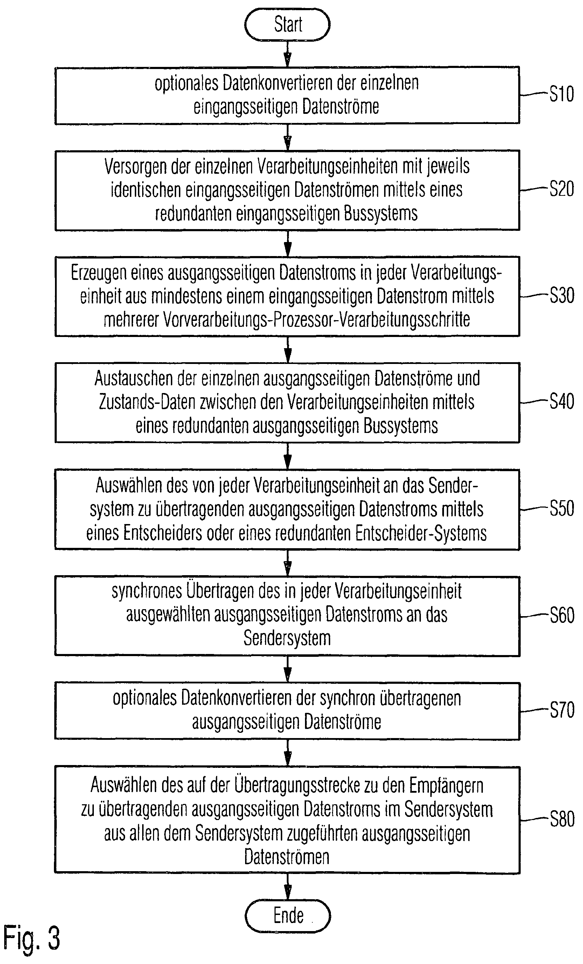

Im Folgenden werden einzelne Ausführungsformen der erfindungsgemäßen Kopfstation anhand der Blockdiagramme in den Figuren 2A, 2B und 2C und das zugehörige erfindungsgemäße Verfahren anhand des Flussdiagramms in Fig. 3 im Detail erläutert.

Im ersten Verfahrensschritt S10, der optional durchgeführt wird, werden die in der Datenquelle - im allgemeinen im Studio - erzeugten Datenströme - zu Programmen oder Services jeweils gehörige Video- und/oder Audio-Datenströme - bei Bedarf in ein anderes Datenformat konvertiert. Hierbei kann es sich beispielsweise um eine eingangsseitige Datenkonvertierung von einem in der Studiotechnik typischerweise verwendetes Datenformat - beispielsweise Serial-Digital-Interface-(SDI)-Datenformat oder Internet-Protocol-(IP)-Datenformat - in ein in der Kopfstation proprietär verwendetes Datenformat und/oder um eine Anpassung des zu übertragenden Datenstroms an ein verändertes Übertragungsmedium handeln.

Die eingangsseitige Datenkonvertierung kann, wie in Fig. 2A dargestellt ist, durch einen einzigen Konvertierungsbaustein 1, der eine Datenkonvertierung von allen in Studios verwendeten Datenformaten in das in der Kopfstation verwendete Datenformat durchführt, oder, wie in Fig. 2B dargestellt ist, durch mehrere einzelne Konvertierungsbausteine 1₁, 1₂, ... , 1ₙ, die jeweils nur eine Datenkonvertierung von einem einzigen im Tonstudio verwendeten Datenformat in das in der Kopfstation verwendete Datenformat durchführt, realisiert sein. Schließlich kann die Datenkonvertierung, wie in Fig. 2C dargestellt ist, durch ein redundantes Konvertierungssystem 1' bestehend aus mehreren redundant ausgeführten Konvertierungsbausteinen 1₁', 1₂', ...,1ₙ' verwirklicht werden. Der einzelnen Konvertierungsbausteine 1₁' 1₂', ..., 1ₙ' führt dabei jeweils eine identische Datenkonvertierung durch. Über eine in Fig. 2C nicht dargestellte Entscheider-Instanz wird ermittelt, welcher Konvertierungsbaustein 1₁', 1₂', ..., 1ₙ' korrekt arbeitet und wessen Konvertierungsergebnis deshalb an den Ausgang des redundanten Konvertierungssystems 1' geführt wird.

Im nächsten Verfahrensschritt S20 werden die von der Datenquelle erzeugten eingangsseitigen Datenströme über ein eingangsseitiges Bussystem 2 den einzelnen identisch ausgeführten Verarbeitungseinheiten 3₁,3₂,...,3ₙ zugeführt. Das eingangsseitige Bussystem 2 kann zur Erhöhung der Zuverlässigkeit der erfindungsgemäßen Kopfstation redundant ausgeführt sein. Die Umschaltung zwischen den einzelnen redundant ausgeführten eingangsseitigen Bussystemen 2 erfolgt bevorzugt durch eine in den Figuren 2A, 2B und 2C nicht dargestellte Entscheiderinstanz.

Da die einzelnen eingangsseitigen Datenströme über das eingangsseitige Bussystem 2 seriell übertragen werden und somit nicht mehr zueinander synchronisiert sind, müssen sie im Hinblick auf eine synchrone Verarbeitung in den einzelnen parallelen Verarbeitungseinheiten 3₁, 3₂, ..., 3ₙ synchronisiert werden. Hierzu werden in den einzelnen Datenpaketen der einzelnen seriell übertragenen eingangsseitigen Datenströme zwischen der Datenquelle und den einzelnen Verarbeitungseinheiten 3₁, 3₂, ..., 3ₙ Synchronisierungsdaten - in den Figuren 2A, 2B und 2C als Synchronisierungsdaten 2 bezeichnet - verwendet. Hierzu können beispielsweise die an bestimmten Datenbit-Positionen im Header (Kopf) der einzelnen Datenpakete abgelegten Zeitstempel-Daten oder die ebenfalls an bestimmten Datenbit-Positionen im Header der einzelnen Datenpakete abgelegten Daten zur Kennzeichnung der Reihenfolge des jeweiligen Datenpakets im jeweiligen eingangsseitigen Datenstrom verwendet werden. Auch können auch bestimmte Datenbit-Folgen an bestimmten Datenbit-Positionen in bestimmten Datenpaketen der einzelnen eingangsseitigen Datenströme, die in den einzelnen Übertragungsstandards spezifiziert sind und somit einen spezifizierten relativen Zeitabstand zueinander aufweisen, identifiziert werden und für die Synchronisierung der einzelnen eingangsseitigen Datenströme herangezogen werden.

Mithilfe dieser Synchronisierungsdaten werden die einzelnen Datenpakete der einzelnen eingangsseitigen Datenströme in der richtigen zeitlichen Reihenfolge in den einzelnen Verarbeitungseinheiten 3₁, 3₂, ..., 3ₙ in den zu erzeugenden ausgangsseitigen Datenstrom gepackt und zeitsynchron zueinander in den einzelnen von den einzelnen Verarbeitungseinheiten 3₁, 3₂, ..., 3ₙ jeweils erzeugten ausgangsseitigen Datenströmen übertragen.

Im darauffolgenden Verfahrensschritt S30 werden in den identisch ausgeführten Verarbeitungseinheiten 3₁, 3₂, ..., 3ₙ jeweils ausgangsseitige Datenströme aus den einzelnen zugeführten eingangsseitigen Datenströmen erzeugt. Da den einzelnen Verarbeitungseinheiten 3₁, 3₂, ..., 3ₙ typischerweise mehrere eingangsseitigen Datenströme zugeführt werden, ist in den Verarbeitungseinheiten 3₁, 3₂, ..., 3ₙ als ganz wesentlicher Verarbeitungsschritt das Multiplexen des ausgangsseitigen Datenstroms aus den einzelnen eingangsseitigen Datenströmen realisiert. Daneben ist in den einzelnen Verarbeitungseinheiten 3₁, 3₂, ..., 3ₙ auch ein Kodieren und eine Datenformatierung des erzeugten ausgangsseitigen Datenstroms bevorzugt vorgesehen. Daneben können zusätzliche in einem Vorverarbeitungsprozessor übliche Verarbeitungsschritte durchgeführt werden, auf die an dieser Stelle nicht näher eingegangen wird.

Im nächsten Verfahrensschritt S40 werden die in den einzelnen Verarbeitungseinheiten 3₁, 3₂, ..., 3ₙ jeweils erzeugten ausgangsseitigen Datenströme über das ausgangsseitige Bussystem 4 zwischen den einzelnen Verarbeitungseinheiten 3₁, 3₂, ..., 3ₙ ausgetauscht. Zusätzlich erfolgt über das ausgangsseitige Bussystem 4 auch ein Austausch der in den einzelnen Verarbeitungseinheiten 3₁, 3₂, ..., 3ₙ erzeugten Zustands-Daten. Diese Zustands-Daten signalisieren jeweils ein korrektes Funktionieren der jeweiligen Verarbeitungseinheit 3₁, 3₂, ..., 3ₙ und ein korrektes Funktionieren der jeweiligen Übertragungsstrecke 5₁, 5₂, ..., 5ₙ zwischen der jeweiligen Verarbeitungseinheit 3₁, 3₂, ..., 3ₙ und dem Sendersystem 6. Analog zum eingangsseitigen Bussystem 2 kann auch das ausgangsseitige Bussystem 4 zur Erhöhung der Zuverlässigkeit der erfindungsgemäßen Kopfstation redundant ausgelegt sein. Die Umschaltung zwischen den einzelnen redundant ausgeführten ausgangsseitigen Bussystemen 4 erfolgt durch eine in den Figuren 2A, 2B und 2C nicht dargestellte Entscheiderinstanz.

Im korrekten Betrieb erzeugen alle Verarbeitungseinheiten 3₁, 3₂, ..., 3ₙ jeweils einen identischen - bitgleichen - Datenstrom und die Übertragungstrecke von jeder Verarbeitungseinheit 3₁, 3₂, ..., 3ₙ zum Sendersystem 6 arbeitet fehlerfrei. Im Fehlerfall wird mindestens eine Verarbeitungseinheit 3₁, 3₂, ..., 3ₙ jeweils einen fehlerhaften Datenstrom erzeugen und/oder mindestens eine Übertragungsstrecke von einer Verarbeitungseinheit 3₁, 3₂, ..., 3ₙ zum Sendersystem 6 ausfallen. Auf der Basis der in den einzelnen Verarbeitungseinheiten 3₁, 3₂, ..., 3ₙ jeweils erzeugten ausgangsseitigen Datenströme und Zustands-Daten wird somit im darauffolgenden Verfahrensschritt S50 in einem Entscheider-System oder mehreren redundanten Entscheider-Systemen jeweils der von der jeweiligen Verarbeitungseinheit 3₁, 3₂, ..., 3ₙ auf die zugehörige Übertragungsstrecke 5₁, 5₂, ..., 5ₙ zwischen der jeweiligen Verarbeitungseinheit 3₁, 3₂, ..., 3ₙ und dem Sendersystem 6 zu übertragende ausgangsseitig Datenstrom ausgewählt.

In einer ersten erfindungsgemäßen Ausführungsform wird die Auswahl des von den einzelnen Verarbeitungseinheiten 3₁, 3₂, ..., 3ₙ jeweils zu übertragenden ausgangsseitigen Datenstroms aus den von allen Verarbeitungseinheiten 3₁, 3₂, ..., 3ₙ jeweils erzeugten ausgangsseitigen Datenströmen in einem Entscheider durchgeführt. Hierbei kann es sich um einen einzigen Entscheider oder bevorzugt gemäß Fig. 2A um ein redundantes Entscheider-System 7 aus mehreren redundant ausgeführten Entscheidern 7₁, 7₂, ..., 7ₙ handeln. Jeder einzelne Entscheider 7₁, 7₂, ..., 7ₙ ist mit dem ausgangsseitigen Bussystem 4 verbunden und hat somit Zugriff auf die in allen Verarbeitungseinheiten 3₁, 3₂, ..., 3ₙ jeweils erzeugten ausgangsseitigen Datenströme und Zustands-Daten.

Über die auf dem ausgangsseitigen Bussystem 4 jeweils verfügbaren ausgangsseitigen Datenströme erlangt der einzelne Entscheider 7₁, 7₂, ..., 7ₙ die für seine Entscheidung wichtige Information, welche Verarbeitungseinheit 3₁, 3₂, ..., 3ₙ überhaupt keinen ausgangsseitigen Datenstrom erzeugt hat und somit keine korrekte Funktionsweise aufweist. Der Vergleich der einzelnen ausgangsseitigen Datenströme mit den Vorgaben des im Gleichwellennetz verwendeten Übertragungsstandards - beispielsweise ATSC-M/H, DVB-T oder DVB-T2 - liefert dem einzelnen Entscheider 7₁, 7₂, ..., 7ₙ eine weitere für die Entscheidung wichtige Information, welche Verarbeitungseinheit 3₁, 3₂, ..., 3ₙ korrekt funktioniert bzw. fehlerhaft betrieben wird. Aus den über das ausgangsseitige Bussystem 4 den einzelnen Entscheidern 7₁, 7₂, ..., 7ₙ jeweils zugeführten und in den einzelnen Verarbeitungseinheiten 3₁, 3₂, ..., 3ₙ jeweils erzeugten Zustands-Daten erhält der jeweilige Entscheider 7₁, 7₂, ..., 7ₙ eine weitere für die Entscheidung wichtige Information, welche Verarbeitungseinheit 3₁, 3₂, ..., 3ₙ und welche zugeordnete Übertragungsstrecke 5₁, 5₂, ..., 5ₙ zwischen der jeweiligen Verarbeitungseinheit 3₁, 3₂, ..., 3ₙ und dem Sendesystem 6 jeweils korrekt oder fehlerbehaftet arbeitet.

Im Fall eines redundanten Entscheider-System 7 mit mehreren redundant ausgeführten Entscheidern 7₁, 7₂, ..., 7ₙ erzeugt jeder einzelne Entscheider 7₁, 7₂, ..., 7ₙ aus den zugeführten ausgangsseitigen Datenströmen und Zustands-Daten in der erwähnten Art und Weise jeweils Steuer-Daten für die einzelnen Verarbeitungseinheiten 3₁, 3₂, ..., 3ₙ. Über eine zusätzliche Entscheider-Instanz, die in den einzelnen Figuren 2A, 2B und 2C nicht dargestellt ist, werden die korrekt arbeitenden Entscheider 7₁, 7₂, ..., 7ₙ identifiziert und deren erzeugte Steuer-Daten an die einzelnen Verarbeitungseinheiten 3₁, 3₂, ..., 3ₙ weitergeführt.

Im Fall eines korrekten Betriebs der jeweiligen Verarbeitungseinheit 3₁, 3₂, ..., 3ₙ und der jeweiligen Übertragungsstrecke 5₁, 5₂, ..., 5ₙ zwischen der jeweiligen Verarbeitungseinheit 3₁, 3₂, ..., 3ₙ und dem Sendersystem 6 wird die jeweilige Verarbeitungseinheit 3₁, 3₂, ..., 3ₙ mittels der Steuer-Daten für eine Übertragung eines ausgangsseitigen Datenstroms auf der zugeordneten Übertragungsstrecke 5₁, 5₂, ..., 5ₙ zwischen der jeweiligen Verarbeitungseinheit 3₁, 3₂, ..., 3ₙ und dem Sendesystem 6 aktiviert. Die aktivierte Verarbeitungseinheit 3₁, 3₂, ..., 3ₙ wird über die zugeordneten Steuer-Daten veranlasst, im Fall eines von der jeweiligen Verarbeitungseinheit 3₁, 3₂, ..., 3ₙ korrekt erzeugten ausgangsseitigen Datenstroms den jeweils korrekt erzeugten ausgangsseitigen Datenstrom auf der zugeordneten Übertragungsstrecke 5₁, 5₂, ..., 5ₙ zum Sendesystem 6 und im Fall eines von der jeweiligen Verarbeitungseinheit 3₁, 3₂, ..., 3ₙ fehlerhaft erzeugten ausgangsseitigen Datenstroms den jeweils von einer anderen Verarbeitungseinheit 3₁, 3₂, ..., 3ₙ korrekt erzeugten ausgangsseitigen Datenstrom zu übertragen. Im letzteren Fall kann bei Vorliegen von mehreren durch jeweils eine Verarbeitungseinheit 3₁, 3₂, ..., 3ₙ korrekt erzeugten ausgangsseitigen Datenströmen der von einer vorab bestimmten Verarbeitungseinheit 3₁, 3₂, ..., 3ₙ jeweils erzeugte ausgangsseitige Datenstrom für die Auswahl in der jeweiligen Verarbeitungseinheit 3₁, 3₂, ..., 3ₙ priorisiert werden.

In einer zweiten erfindungsgemäßen Ausführungsform wird die Auswahl des von den einzelnen Verarbeitungseinheiten 3₁, 3₂, ..., 3ₙ jeweils zu übertragenden ausgangsseitigen Datenstroms aus den von allen Verarbeitungseinheiten 3₁, 3₂, ..., 3ₙ jeweils erzeugten ausgangsseitigen Datenströmen durch einen gemäß Fig. 2B innerhalb einer einzigen als Master-Verarbeitungseinheit agierenden Verarbeitungseinheit 3₁ integrierten Entscheider realisiert, der entweder als einzelner Entscheider oder als redundantes Entscheider-System mit mehreren redundant ausgeführten Entscheidern besteht.

Aus den über das ausgangsseitige Bussystem 4 der Master-Verarbeitungseinheit 3₁ von den übrigen Verarbeitungseinheiten 3₂, ..., 3ₙ jeweils zugeführten ausgangsseitigen Datenströmen und Zustands-Daten und den in der Master-Verarbeitungseinheit 3₁ erzeugten ausgangsseitigen Datenstrom und Zustands-Daten werden die für alle Verarbeitungseinheiten 3₁, 3₂, ..., 3ₙ jeweils benötigten Steuer-Daten generiert. Für den Fall eines aus mehreren redundant ausgeführten Entscheidern zusammengesetzten redundanten Entscheider-Systems innerhalb einer Master-Verarbeitungseinheit 3₁ gilt das zu der ersten erfindungsgemäßen Ausführungsform Gesagte für das aus mehreren redundant ausgeführten Entscheidern 7₁, 7₂, ..., 7ₙ zusammengesetzte redundante Entscheider-System äquivalent.

In einer dritten erfindungsgemäßen Ausführungsform ist gemäß Fig. 2C in jeder Verarbeitungseinheit 3₁, 3₂, ..., 3ₙ jeweils ein Entscheider integriert, der entweder als einzelner Entscheider oder als redundantes Entscheider-System mit mehreren redundant ausgeführten Entscheidern besteht. Dieser Entscheider ermittelt die Steuer-Daten für die zugehörige Verarbeitungseinheit 3₁, 3₂, ..., 3ₙ aus den der jeweiligen Verarbeitungseinheit 3₁, 3₂, ..., 3ₙ über das ausgangsseitige Bussystem 4 von den jeweilig anderen Verarbeitungseinheiten 3₁, 3₂, ..., 3ₙ jeweils zugeführten ausgangsseitigen Datenströmen und Zustands-Daten und den in der zugehörigen Verarbeitungseinheit 3₁, 3₂, ..., 3ₙ erzeugten ausgangsseitigen Datenstrom und Zustands-Daten. Für den Fall eines aus mehreren redundant ausgeführten Entscheidern zusammengesetzten redundanten Entscheider-Systems innerhalb der einzelnen Verarbeitungseinheiten 3₁, 3₂, ..., 3ₙ gilt das zu der ersten erfindungsgemäßen Ausführungsform Gesagte für das aus mehreren redundant ausgeführten Entscheidern 7₁, 7₂, ..., 7ₙ zusammengesetzte redundante Entscheider-System äquivalent.

Die Auswahl des von der jeweiligen Verarbeitungseinheit 3₁, 3₂, ..., 3ₙ zum Sendersystem 6 zu übertragenden ausgangsseitigen Datenstroms aus dem in der jeweiligen Verarbeitungseinheit 3₁, 3₂, ..., 3ₙerzeugten und zwischengepufferten ausgangsseitigen Datenstrom oder einem in einer anderen Verarbeitungseinheit 3₁, 3₂, ..., 3ₙ erzeugten, über das ausgangsseitige Bussystem 4 übertragene und in der jeweiligen Verarbeitungseinheit 3₁, 3₂, ..., 3ₙ zwischengepufferten ausgangsseitigen Datenstrom erfolgt durch Ansteuerung eines in der jeweiligen Verarbeitungseinheit 3₁, 3₂, ..., 3ₙ realisierten Schalters 8₁, 8₂, ..., 8ₙ mittels der der jeweiligen Verarbeitungseinheit 3₁, 3₂, ..., 3ₙ von einem der Entscheider zugeführten Steuerungs-Daten.

Um im Sendesystem 6 lückenlos zwischen den auf den einzelnen Übertragungsstrecken 5₁, 5₂, ...,, 5ₙ jeweils übertragenen ausgangsseitigen Datenströme umzuschalten, ist eine phasenkohärente Übertragung der einzelnen ausgangsseitigen Datenströme auf den einzelnen Übertragungsstrecken 5₁, 5₂, ....,, 5ₙ von der jeweiligen Verarbeitungseinheit 3₁, 3₂, ..., 3ₙ zum Sendesystem 6 nötig. Hierzu erfolgen Schaltvorgänge in den einzelnen Schaltern 8₁, 8₂, ..., 8ₙ jeweils nur zu den Zeitpunkten des Übergangs zwischen jeweils zwei aufeinander folgenden Datenrahmen der einzelnen ausgangsseitigen Datenströme. Da für die Ermittlung der in den einzelnen Verarbeitungseinheiten 3₁, 3₂, ..., 3ₙ jeweils auszuwählenden ausgangsseitigen Datenströme in den einzelnen Entscheidern oder Entscheider-Systemen eine gewisse Verarbeitungszeit benötigt wird, erfolgt die Umschaltung zwischen zwei ausgangsseitigen Datenströmen in den einzelnen Schaltern 8₁, 8₂, ..., 8ₙ jeweils um die Übertragungszeit eines Datenrahmens verzögert.

Im nächsten Verfahrensschritt S60 werden die in den einzelnen Verarbeitungseinheiten 3₁, 3₂, ..., 3ₙ für die Übertragung zum Sendersystem 6 jeweils ausgewählten ausgangsseitigen Datenströme synchron auf die zugehörige Übertragungsstrecke 5₁, 5₂, ..., 5ₙ zum Sendersystem 6 übertragen. Für die Synchronisierung der einzelnen ausgangsseitigen Datenströme erhält jede Verarbeitungseinheit 3₁, 3₂, ..., 3ₙ von einer Synchronisierungseinheit 9 - beispielsweise eine Empfangseinheit für das Global-Position-System-(GPS)-Signal oder das DCF77-Signal, die jeweils als Referenzzeitsignale dienen - jeweils Synchronisierungsdaten, die in den Figuren 2A, 2B und 2C als Synchronisierungsdaten 2 bezeichnet werden. Die mit Synchronisierungsdaten 1 versehenen Datenpakete in den einzelnen ausgangsseitigen Datenströmen werden mit den von der Synchronisierungseinheit 9 zur Verfügung gestellten Synchronisierungsdaten 2 synchronisiert, so dass eine synchrone Übertragung der von den einzelnen Verarbeitungseinheiten 3₁, 3₂, ..., 3ₙ ausgewählten ausgangsseitigen Datenströme garantiert ist.

Im darauf folgenden optionalen Verfahrensschritt S70 erfolgt eine ausgangsseitige Datenkonvertierung der in den einzelnen Verarbeitungseinheiten 3₁, 3₂, ..., 3ₙ jeweils ausgewählten und zum Sendersystem 6 übertragenen ausgangsseitigen Datenströme von einem in der erfindungsgemäßen Kopfstation verwendeten typischerweise proprietären Datenformat zu einem auf der Übertragungsstrecke zwischen Sendersystem 6 und dem Empfängersystem des Gleichwellennetzes verwendeten Datenformats. Die ausgangsseitige Datenkonvertierung kann äquivalent zur eingangsseitigen Konvertierung in Verfahrensschritt S10 durch eine einzige Konvertierungseinheit 10 gemäß Fig. 2A realisiert sein, die über alle möglichen Datenkonvertierungen verfügt. Gemäß Fig. 2B kann die ausgangsseitige Datenkonvertierung auch durch mehrere Konvertierungseinheiten 10₁, 10₂, ...., 10ₙ durchgeführt werden, die jeweils eine Datenkonvertierung lediglich zwischen zwei bestimmten Datenformaten durchführen.

Auch kann die ausgangsseitiger Datenkonvertierung gemäß Fig. 2C redundant ausgeführt sein, indem ein redundantes Konvertierungssystem 10' bestehend aus mehreren redundant ausgeführten Konvertierungsbausteinen 10₁', 10₂', ..., 10ₙ' verwirklicht wird. Der einzelnen Konvertierungsbausteine 10₁', 10₂', ..., 10ₙ' führen dabei jeweils eine identische Datenkonvertierung durch. Über eine in Fig. 2C nicht dargestellte Entscheider-Instanz wird ermittelt, welcher Konvertierungsbaustein 10₁', 10₂', ..., 10ₙ' korrekt arbeitet und wessen Konvertierungsergebnis deshalb an den Ausgang des redundanten Konvertierungssystems 10' geführt wird.

Die konvertierten Datenströme werden, wie in den Figuren 2A bis 2C dargestellt ist, direkt dem Sendersystem 6 oder alternativ über das ausgangsseitige Bussystem 4 und die jeweiligen Verarbeitungseinheiten 3₁, 3₂, ..., 3ₙ dem Sendersystem 6 zugeführt.

Im abschließenden Verfahrensschritt S80 werden im Sendersystem 6, das typischerweise aus mehreren regional verteilten Sendeanlagen besteht, der auf die Übertragungsstrecke 11 zu übertragende ausgangsseitige Datenstrom aus allen in den einzelnen Übertragungsstrecken 5₁, 5₂, ..., 5ₙ zwischen der jeweiligen Verarbeitungseinheit 3₁, 3₂, ..., 3ₙ und dem Sendersystem 6 jeweils übertragenen ausgangsseitigen Datenströmen ausgewählt. Das Sendersystem 6 erkennt anhand der auf den einzelnen Übertragungsstrecken 5₁, 5₂, ..., 5ₙ jeweils empfangenen ausgangsseitigen Datenströme, welche Übertragungsstrecken 5₁, 5₂, ..., 5ₙ fehlerbehaftet sind. Für den Fall, dass eine Übertragungsstrecke 5₁, 5₂, ..., 5ₙ, aus der das Sendersystem 6 den ausgangsseitigen Datenstrom für eine Weiterleitung zur Übertragungsstrecke 11 zwischen dem Sendersystem 6 und dem Empfängersystem bisher ausgewählt hat, nach einem korrekten Betrieb in einen fehlerbehafteten Betrieb übergeht, erfolgt eine Umschaltung auf einen ausgangsseitigen Datenstrom, der auf einer aktuell korrekt funktionierenden Übertragungsstrecke 5₁, 5₂, ..., 5ₙ übertragen wird. Die Umschaltung zwischen den beiden ausgangsseitigen Datenströmen erfolgt dabei lückenfrei, da die auf allen Übertragungsstrecken 5₁, 5₂, ..., 5ₙ jeweils übertragenen ausgangsseitigen Datenströme synchron und phasenkohärent übertragen werden.

Die Erfindung ist nicht auf die einzelnen Ausführungsformen der erfindungsgemäßen Kopfstation und des zugehörigen erfindungsgemäßen Verfahrens beschränkt. Von der Erfindung sind insbesondere alle Kombinationen der in den einzelnen Patentansprüchen beanspruchten Merkmale, der in der Beschreibung offenbarten Merkmale und der in den einzelnen Figuren der Zeichnung dargestellten Merkmale mit abgedeckt.

## Patentansprüche

1. Kopfstation mit
mindestens zwei identischen Verarbeitungseinheiten (3₁, 3₂, ..., 3ₙ), die mit mindestens einem identischen eingangsseitigen Datenstrom jeweils versorgt sind und einen ausgangsseitigen Datenstrom erzeugen,
einem mit den Verarbeitungseinheiten (3₁, 3₂, ..., 3ₙ) verbundenen ausgangsseitiges Bussystem (4) zum Austausch von in den Verarbeitungseinheiten (3₁, 3₂, ..., 3ₙ) jeweils erzeugten ausgangsseitigen Datenströmen und Zustands-Daten,
zumindest zwei mit dem ausgangsseitigen Bussystem (4) verbundenen Entscheidern (7₁, 7₂, ..., 7ₙ; 7; 7₁'; 7₁'', 72'',...,
7ₙ'') zur Auswahl des in jeder Verarbeitungseinheit (3₁, 3₂, ..., 3ₙ) jeweils an ein Sendersystem (6) zu übertragenden ausgangsseitigen Datenstroms ausgehend von allen in den einzelnen Verarbeitungseinheiten (3₁, 3₂, ..., 3ₙ) jeweils erzeugten Datenströmen und Zustands-Daten und
einer Synchronisierungseinheit (9) zur synchronen Übertragung des von jeder Verarbeitungseinheit (3₁, 3₂, ...,3ₙ) ausgewählten und an das Sendersystem (6) zu übertragenden ausgangsseitigen Datenstroms,
wobei die Entscheider (7₁, 7₂, ..., 7ₙ; 7; 7₁'; 7₁'', 7₂'', ..., 7ₙ'') redundant aufgebaut sind.

2. Kopfstation nach Anspruch 1,
**dadurch gekennzeichnet,**
**dass** die redundant ausgeführten Entscheider (7₁, 7₂, ..., 7ₙ; 7) außerhalb der Verarbeitungseinheiten (3₁, 3₂, ..., 3ₙ) angeordnet sind, wobei jeder Entscheider (7₁, 7₂, ..., 7ₙ; 7) für die Auswahl des von jeder Verarbeitungseinheit (3₁, 3₂, ..., 3ₙ) an das Sendersystem (6) zu übertragenden ausgangsseitigen Datenstroms zuständig ist.

3. Kopfstation nach Anspruch 1,
**dadurch gekennzeichnet,**
**dass** die redundant ausgeführten Entscheider (7₁', ...) in einer einzigen Verarbeitungseinheit (3₁, 3₂, ...,3ₙ) integriert sind, wobei die redundant ausgeführten Entscheider (7₁', ...) für die Auswahl des von jeder Verarbeitungseinheit (3₁, 3₂, ..., 3ₙ) an das Sendersystem (6) zu übertragenden ausgangsseitigen Datenstroms zuständig sind.

4. Kopfstation nach Anspruch 1,
**dadurch gekennzeichnet,**
**dass** in jeder Verarbeitungseinheit (3₁, 3₂, ..., 3ₙ) jeweils redundant ausgeführte Entscheider (7₁'', 7₂'', ..., 7ₙ'') integriert sind, wobei die redundant ausgeführten Entscheider (7₁'', 7₂'', ..., 7ₙ'') in der jeweiligen Verarbeitungseinheit (3₁, 3₂, ..., 3ₙ) für die Auswahl des von der jeweiligen Verarbeitungseinheit (3₁, 3₂, ..., 3ₙ) an das Sendersystem (6) zu übertragenden ausgangsseitigen Datenstroms zuständig sind.

5. Kopfstation nach einem der Ansprüche 1 bis 4, **dadurch gekennzeichnet,**
**dass** die Auswahl des von der jeweiligen Verarbeitungseinheit (3₁, 3₂, ..., 3ₙ) an das Sendersystem (6) jeweils zu übertragenden ausgangsseitigen Datenstroms an den Übergängen zwischen jeweils aufeinander folgenden Datenrahmen der synchron zu übertragenden ausgangsseitigen Datenströme erfolgt.

6. Kopfstation nach einem der Ansprüche 1 bis 5,
**dadurch gekennzeichnet,**
**dass** die Übertragung der synchron zu übertragenden ausgangsseitigen Datenströme an das Sendersystem (6) um die Übertragungszeit eines Datenrahmens verzögert erfolgt.

7. Kopfstation nach einem der Ansprüche 1 bis 6,
**dadurch gekennzeichnet,**
**dass** die Auswahl des von der jeweiligen Verarbeitungseinheit (3₁, 3₂, ..., 3ₙ) an das Sendersystem (6) jeweils zu übertragenden ausgangsseitigen Datenstroms anhand der Verfügbarkeit der jeweils auszuwählenden ausgangsseitigen Datenströme in der jeweiligen Verarbeitungseinheit (3₁, 3₂, ..., 3ₙ) und/oder der Konformität der jeweils auszuwählenden ausgangsseitigen Datenströme mit Anforderungen des jeweils verwendeten Übertragungsstandards und/oder der die Funktionsfähigkeit der jeweiligen Verarbeitungseinheit (3₁, 3₂, ..., 3ₙ) und der jeweiligen Übertragungsstrecke (5₁, 5₂, ..., 5ₙ) von der jeweiligen Verarbeitungseinheit (3₁, 3₂, ..., 3ₙ) zum Sendersystem (6) kennzeichnenden Zustands-Daten erfolgt.

8. Kopfstation nach einem der Ansprüche 1 bis 7,
**dadurch gekennzeichnet,**
**dass** ein eingangsseitiges Bussystem (2) zur Versorgung der einzelnen Verarbeitungseinheiten (3₁, 3₂, ..., 3ₙ) mit identischen, von einer Datenquelle jeweils erzeugten eingangsseitigen Datenströmen vorgesehen ist.

9. Kopfstation nach Anspruch 8,
**dadurch gekennzeichnet,**
**dass** eine Synchronisierung der eingangsseitigen Datenströme mittels Austausch von Synchronisierungsdaten über das eingangsseitige Bussystem (2) erfolgt.

10. Kopfstation nach Anspruch 9,
**dadurch gekennzeichnet,**
**dass** die Synchronisierungsdaten in Datenpaketen der einzelnen eingangsseitigen Datenströme jeweils übertragene Zeitstempel-Daten und/oder Daten zur Kennzeichnung einer Reihenfolge von Datenpaketen in einzelnen eingangsseitigen Datenströmen und/oder eine spezifizierte, an einer spezifizierten Stelle in spezifizierten Datenpaketen in einzelnen eingangsseitigen Datenströmen jeweils übertragene Datenbitfolge sind.

11. Kopfstation nach einem der Ansprüche 8 bis 10,
**dadurch gekennzeichnet,**
**dass** das eingangsseitige Bussystem (2) und/oder das ausgangsseitige Bussystem (4) redundant ausgelegt sind.

12. Kopfstation nach einem der Ansprüche 1 bis 11,
**dadurch gekennzeichnet,**
**dass** mindestens eine Konvertierungseinheit (10; 10₁, 10₂, ..., 10ₙ; 10₁', 10₂', ..., 10ₙ', 10') zur Datenkonvertierung der ausgewählten und an das Sendersystem (6) zu übertragenden ausgangsseitigen Datenströme in ein Datenformat eines verwendeten Übertragungsstandards vorgesehen ist.

13. Kopfstation nach Anspruch 12,
**dadurch gekennzeichnet,**
**dass** die Konvertierungseinheiten (10₁', 10₂', ..., 10ₙ', 10') redundant ausgelegt sind.

14. Verfahren zur Auswahl eines in identischen Verarbeitungseinheiten (3₁, 3₂, ..., 3ₙ) einer Kopfstation jeweils an ein Sendersystem (6) zu übertragenden ausgangsseitigen Datenstroms mit folgenden
Verfahrensschritten:
• Erzeugen eines ausgangsseitigen Datenstroms in jeder Verarbeitungseinheit (3₁, 3₂, ..., 3ₙ) aus mindestens einem der jeweiligen Verarbeitungseinheit (3₁, 3₂, ..., 3ₙ) zugeführten eingangsseitigen Datenstrom,
• Austauschen der in den Verarbeitungseinheiten (3₁, 3₂, ..., 3ₙ) jeweils erzeugten ausgangsseitigen Datenströme und Zustands-Daten über ein mit den Verarbeitungseinheiten (3₁, 3₂, ..., 3ₙ) verbundenes ausgangsseitiges Bussystem (4),
• Auswählen des in jeder Verarbeitungseinheit (3₁, 3₂, ..., 3ₙ) an das Sendersystem (6) zu übertragenden ausgangsseitigen Datenstroms mittels zumindest zwei mit dem ausgangsseitigen Bussystem (4) verbundenen Entscheidern (7₁, 7₂, ..., 7ₙ; 7; 7₁'; 7₁'', 7₂'', ..., 7ₙ''), dem jeweils alle in den einzelnen Verarbeitungseinheiten (3₁, 3₂, ..,3ₙ) jeweils erzeugten Datenströme und Zustands-Daten zugeführt werden, und
• synchrones Übertragen des für jede
Verarbeitungseinheit (3₁, 3₂, ..., 3ₙ) jeweils ausgewählten ausgangsseitigen Datenstroms an das Sendersystem (6), wobei die Entscheider (7₁...7ₙ) redundant verwendet werden.

15. Verfahren nach Anspruch 14,
**dadurch gekennzeichnet,**
**dass** die synchrone Übertragung der einzelnen ausgangsseitigen Datenströme an das Sendersystem (6) an den Übergängen zwischen jeweils aufeinander folgenden Datenrahmen der synchron zu übertragenden ausgangsseitigen Datenströme erfolgt.

16. Verfahren nach Anspruch 14 oder 15,
**dadurch gekennzeichnet,**
**dass** die synchrone Übertragung der einzelnen ausgangsseitigen Datenströme an das Sendersystem (6) um die Übertragungszeit eines Datenrahmens verzögert erfolgt.

17. Verfahren nach einem der Ansprüche 14 bis 16,
**dadurch gekennzeichnet,**
**dass** die Auswahl des von der jeweiligen Verarbeitungseinheit (3₁, 3₂, ..., 3ₙ) an das Sendersystem (6) jeweils zu übertragenden ausgangsseitigen Datenstroms anhand der Verfügbarkeit der jeweils auszuwählenden ausgangsseitigen Datenströme in der jeweiligen Verarbeitungseinheit und/oder der Konformität der jeweils auszuwählenden ausgangsseitigen Datenströme mit Anforderungen des jeweils verwendeten Übertragungsstandards und/oder der die Funktionsfähigkeit der jeweiligen Verarbeitungseinheit (3₁, 3₂, ...,3ₙ) und der jeweiligen Übertragungsstrecke (5₁, 5₂, ..., 5ₙ) von der jeweiligen Verarbeitungseinheit (3₁, 3₂, ..., 3ₙ) zum Sendersystem (6) kennzeichnenden Zustands-Daten erfolgt.

18. Verfahren nach einem der Ansprüche 14 bis 17,
**dadurch gekennzeichnet,**
**dass** die einzelnen Verarbeitungseinheiten (3₁, 3₂, ..., 3ₙ) über ein eingangsseitiges Bussystem (2) mit identischen, von einer Datenquelle jeweils erzeugten eingangsseitigen Datenströmen versorgt werden.

19. Verfahren nach Anspruch 18,
**dadurch gekennzeichnet,**
**dass** die eingangsseitigen Datenströme mittels Austausch von Synchronisierungsdaten über das eingangsseitige Bussystem (2) synchronisiert werden.

20. Verfahren nach einem der Ansprüche 14 bis 19,
**dadurch gekennzeichnet,**
**dass** die ausgewählten und an das Sendersystem (6) zu übertragenden ausgangsseitigen Datenströme mittels Konvertierungseinheiten (10; 10₁, 10₂, ..., 10ₙ; 10₁', 10₂' , ..., 10ₙ', 10') in ein Datenformat eines verwendeten Übertragungsstandards konvertiert werden.

## Claims

1. Head end station with
at least two identical processing units (3₁, 3₂, ..., 3ₙ) which are each supplied with at least one identical input side data stream and generate an output side data stream,
an output side bus system (4) connected with the processing units (3₁, 3₂, ..., 3ₙ) for exchanging output side data streams and status data generated in each of the processing units (3₁, 3₂, ..., 3ₙ),
at least two decision elements (7₁, 7₂, ..., 7ₙ; 7; 7₁'; 7₁", 7₂", ..., 7ₙ") connected with the output side bus system (4) for selecting the output side data stream in each processing unit (3₁, 3₂, ..., 3ₙ) to be transmitted to a transmitter system (6) from all the data streams and status data generated in each of the individual processing units (3₁, 3₂, ..., 3ₙ) and
a synchronising unit (9) for synchronous transmission of the output side data stream selected and to be transmitted to the transmitter system (6) from each processing unit (3₁, 3₂, ..., 3ₙ),
wherein the decision elements (7₁, 7₂, ..., 7ₙ; 7; 7₁'; 7₁", 7₂", ..., 7ₙ") are designed so as to be redundant.

2. Head end station according to claim 1,
**characterised in that**
the decision elements (7₁, 7₂, ..., 7ₙ; 7) which are designed so as to be redundant are arranged outside the processing units (3₁, 3₂, ..., 3ₙ), wherein each decision element (7₁, 7₂, ..., 7ₙ; 7) is responsible for selecting the output side data stream to be transmitted to the transmitter system (6) from each processing unit (3₁, 3₂, ..., 3ₙ).

3. Head end station according to claim 1,
**characterised in that**
the decision elements (7_{1'}, ...) which are designed so as to be redundant are integrated in a single processing unit (3₁,3₂, ..., 3ₙ), wherein the decision elements (7_{1'}, ...) which are designed so as to be redundant are responsible for selecting the output side data stream to be transmitted to the transmitter system (6) from each processing unit (3₁, 3₂, ..., 3ₙ).

4. Head end station according to claim 1,
**characterised in that**
decision elements (7₁", 7₂", ,.., 7ₙ") which are designed so as to be redundant are integrated in each processing unit (3₁, 3₂, ..., 3ₙ), wherein the decision elements (7₁", 7₂", ..., 7ₙ") which are designed so as to be redundant in the respective processing unit (3₁, 3₂, ..., 3ₙ) are responsible for selecting the output side data stream to be transmitted to the transmitter system (6) from the respective processing unit (3₁, 3₂, ..., 3ₙ).

5. Head end station according to one of claims 1 to 4,
**characterised in that**
the selection of the output side data stream to be transmitted to the transmitter system (6) from the respective processing unit (3₁, 3₂, ..., 3ₙ) is made at the transitions between successive data frames of the output side data stream to be transmitted synchronously.

6. Head end station according to one of claims 1 to 5,
**characterised in that**
the transmission of the output side data streams to be transmitted synchronously to the transmitter system (6) is carried out delayed by the transmission time of one data frame.

7. Head end station according to one of claims 1 to 6,
**characterised in that**
the selection of the output side data stream to be transmitted to the transmitter system (6) from the respective processing unit (3₁, 3₂, ..., 3ₙ) is made on the basis of the availability of the output side data streams to be selected in the respective processing unit (3₁, 3₂, ..., 3ₙ) and/or the conformity of the output side data streams to be selected with requirements of the particular transmission standard used and/or the status data characterising the operability of the respective processing unit (3₁, 3₂, ..., 3ₙ) and the particular transmission path (5₁, 5₂, ..., 5ₙ) from the respective processing unit (3₁, 3₂, ..., 3ₙ) to the transmitter system (6).

8. Head end station according to one of claims 1 to 7,
**characterised in that**
an input side bus system (2) is provided to supply the individual processing units (3₁, 3₂,..., 3ₙ) with identical input side data streams generated from one data source in each case.

9. Head end station according to claim 8,
**characterised in that**
synchronisation of the input side data streams is carried out by means of exchanging of synchronising data over the input side bus system (2).

10. Head end station according to claim 9,
**characterised in that**
the synchronising data is time stamp data transmitted in each case in data packets of the individual input side data streams and/or data for characterising a sequence of data packets in individual input side data streams and/or a specified data bit sequence transmitted at a specified place in specified data packets in individual input side data streams.

11. Head end station according to one of claims 8 to 10,
**characterised in that**
the input side bus system (2) and/or the output side bus system (4) are designed so as to be redundant.

12. Head end station according to one of claims 1 to 11,
**characterised in that**
at least one converting unit (10; 10₁, 10₂, ..., 10ₙ; 10₁', 10₂', ..., 10ₙ', 10') is provided for converting the data of the selected output side data streams to be transmitted to the transmitter system (6) into a data format of a transmission standard used.

13. Head end station according to claim 12,
**characterised in that**
the converting units (10₁', 10₂', ..., 10ₙ', 10') are designed so as to be redundant.

14. Method for selecting an output side data stream in identical processing units (3₁, 3₂, ..., 3ₙ) of a head end station to be transmitted in each case to a transmitter system (6) with the following method steps:
• . generation of an output side data stream in each processing unit (3₁, 3₂, ..., 3ₙ) from at least one input side data stream supplied to the respective processing unit (3₁, 3₂, ..., 3ₙ),
• . exchange of the output side data streams and status data generated in each of the processing units (3₁, 3₂, ..., 3ₙ) over an output side bus system (4) connected with the processing units (3₁, 3₂, ..., 3ₙ),
• . selection of the output side data stream in each processing unit (3₁, 3₂, ..., 3ₙ) to be transmitted to the transmitter system (6) by means of at least two at least two decision elements (7₁, 7₂, ..., 7ₙ; 7; 7₁'; 7₁", 7₂", ..., 7ₙ") connected with the output side bus system (4) to which in each case all the data streams and status data generated in the individual processing units (3₁, 3₂, ..., 3ₙ) are supplied, and
• . synchronous transmission of the output side data stream selected in each case for each processing unit (3₁, 3₂, ..., 3ₙ) to the transmitter system (6), wherein the decision elements (7₁ ... 7ₙ) are used redundantly.

15. Method according to claim 14,
**characterised in that**
the synchronous transmission of the individual output side data streams to the transmitter system (6) is carried out at the transitions between successive data frames of the output side data streams to be transmitted synchronously.

16. Method according to claim 14 or 15,
**characterised in that**
the synchronous transmission of the individual output side data streams to the transmitter system (6) is carried out delayed by the transmission time of one data frame.

17. Method according to one of claims 14 to 16,
**characterised in that**
the selection of the output side data stream to be transmitted to the transmitter system (6) from the respective processing unit (3₁, 3₂, ..., 3ₙ) is made on the basis of the availability of the output side data streams to be selected in the respective processing unit and/or the conformity of the output side data streams to be selected with requirements of the particular transmission standard used and/or the status data characterising the operability of the respective processing unit (3₁, 3₂, ..., 3ₙ) and the particular transmission path (5₁, 5₂, ..., 5ₙ) from the respective processing unit (3₁, 3₂, ..., 3ₙ) to the transmitter system (6).

18. Method according to one of claims 14 to 17,
**characterised in that**
the individual processing units (3₁, 3₂, ..., 3ₙ) are supplied with identical input side data streams generated from one data source in each case over an input side bus system (2).

19. Method according to claim 18,
**characterised in that**
the input side data streams are synchronised by means of exchanging of synchronising data over the input side bus system (2).

20. Method according to one of claims 14 to 19,
**characterised in that**
the selected output side data streams to be transmitted to the transmitter system (6) are converted by means of converting units (10; 10₁, 10₂, ..., 10ₙ; 10₁', 10₂', ..., 10ₙ', 10') into a data format of a transmission standard used.

## Revendications

1. Tête de station comportant
au moins deux unités de traitement identiques (3₁, 3₂, ..., 3ₙ), qui sont alimentées respectivement avec au moins un flux de données côté entrée identique et génèrent un flux de données côté sortie, un système de bus (4) côté sortie relié aux unités de traitement (3₁, 3₂, ..., 3ₙ) pour échanger les flux de données et les données d'état côté sortie générés respectivement dans les unités de traitement (3₁, 3₂, ..., 3ₙ),
au moins deux décideurs (7₁, 7₂, ..., 7ₙ; 7; 7₁' ; 7₁", 7₂", ..., 7ₙ") reliés au système de bus côté sortie (4) pour sélectionner le flux de données côté sortie à transmettre respectivement à un système émetteur (6) dans chaque unité de traitement (3₁, 3₂, ..., 3ₙ) en fonction de tous les flux de données et les données d'état générés respectifs dans les différentes unités de traitement (3₁, 3₂, ..., 3ₙ) et
une unité de synchronisation (9) pour une transmission synchrone du flux de données côté sortie à transmettre au système émetteur (6) et sélectionné par chaque unité de traitement (3₁, 3₂, ..., 3ₙ),
dans laquelle les décideurs (7₁, 7₂, ..., 7ₙ; 7 ; 7₁' ; 7₁", 7₂", ..., 7ₙ") sont réalisés de façon redondante.

2. Tête de station selon la revendication 1, **caractérisée en ce que**
les décideurs réalisés de façon redondante (7₁, 7₂, ..., 7ₙ ; 7) sont disposées à l'extérieur des unités de traitement (3₁, 3₂, ..., 3ₙ), dans laquelle chaque décideur (7₁, 7₂, ..., 7ₙ; 7) est apte pour la sélection du flux de données côté sortie à transmettre au système émetteur (6) par chaque unité de traitement (3₁, 3₂, ..., 3ₙ).

3. Tête de station selon la revendication 1, **caractérisée en ce que**
les décideurs réalisés de manière redondante (7₁', ...) sont intégrés dans une seule unité de traitement (3₁, 3₂, ..., 3ₙ), dans laquelle les décideurs réalisés de manière redondante (7₁', ...) sont aptes pour la sélection du flux de données côté sortie à transmettre au système émetteur (6) par chaque unité de traitement (3₁, 3₂, ..., 3ₙ).

4. Tête de station selon la revendication 1, **caractérisée en ce que**
les décideurs réalisés de manière redondante respectifs (7₁", 7₂", ..., 7ₙ") sont intégrés dans chaque unité de traitement (3₁, 3₂, ..., 3ₙ), dans laquelle les décideurs réalisés de manière redondante (7₁", 7₂", ..., 7ₙ") dans l'unité de traitement respective (3₁, 3₂, ..., 3ₙ) sont aptes pour la sélection du flux de données côté sortie à transmettre au système émetteur (6) par l'unité de traitement respective (3₁, 3₂, ..., 3ₙ).

5. Tête de station selon l'une des revendications 1 à 4, **caractérisée en ce que**
la sélection du flux de données côté sortie à transmettre respectivement au système émetteur (6) par l'unité de traitement respective (3₁, 3₂, ..., 3ₙ) se produit aux transitions entre les trames de données consécutives respectives des flux de données côté sortie à transmettre de manière synchrone.

6. Tête de station selon l'une des revendications 1 à 5, **caractérisée en ce que**
la transmission des flux de données côté sortie à transmettre de manière synchrone se produit de manière retardée du temps de transmission d'une trame de données au système émetteur (6).

7. Tête de station selon l'une des revendications 1 à 6, **caractérisée en ce que**
la sélection du flux de données côté sortie à transmettre respectivement au système émetteur (6) par l'unité de traitement respective (3₁, 3₂, ..., 3ₙ) se produit selon la disponibilité des flux de données côté sortie à sélectionner respectifs dans l'unité de traitement respective (3₁, 3₂, ..., 3ₙ) et/ou la conformité des flux de données côté sortie à sélectionner respectifs aux exigences du standard de transmission utilisé respectif et/ou les données d'état caractérisant l'aptitude de l'unité de traitement respective (3₁, 3₂, ..., 3ₙ) et des lignes de transmission respectives (5₁, 5₂, ..., 5ₙ) par l'unité de traitement respective (3₁, 3₂, ..., 3ₙ) vers le système émetteur (6).

8. Tête de station selon l'une des revendications 1 à 7, **caractérisée en ce que**
un système de bus côté entrée (2) est prévu pour l'alimentation des différentes unités de traitement (3₁, 3₂, ..., 3ₙ) par des flux de données identiques côté entrée générés respectifs par une source de données.

9. Tête de station selon la revendication 8, **caractérisée en ce que**
une synchronisation des flux de données côté entrée se produit grâce à un échange de données de synchronisation par l'intermédiaire du système de bus côté entrée (2).

10. Tête de station selon la revendication 9, **caractérisée en ce que**
les données de synchronisation sont des données d'horodateur transmises respectivement dans des paquets de données des différents flux de données côté entrée et/ou des données pour la caractérisation d'une série de paquets de données dans différents flux de données côté entrée et/ou une série spécifiée de bits de données transmise respectivement à un endroit spécifié dans des paquets de données spécifiés dans différents flux de données côté entrée.

11. Tête de station selon l'une des revendications 8 à 10, **caractérisée en ce que**
le système de bus côté entrée (2) et/ou le système de bus côté sortie (4) sont prévus de manière redondante.

12. Tête de station selon l'une des revendications 1 à 11, **caractérisée en ce que**
au moins une unité de conversion (10 ; 10₁, 10₂, ...
10ₙ ; 10₁', 10₂', ..., 10ₙ', 10') est prévue pour convertir des données des flux de données côté sortie sélectionnés et à transmettre au système émetteur (6) en un format de données d'un standard de transmission utilisé.

13. Tête de station selon la revendication 12, **caractérisée en ce que**
les unités de conversion (10₁', 10₂', ..., 10ₙ', 10') sont prévues de manière redondante.

14. Procédé de sélection d'un flux de données côté sortie à transmettre respectivement à un système émetteur (6) dans des unités de traitement identiques (3₁, 3₂, ..., 3ₙ) d'une tête de station comportant les étapes de procédé suivantes :
• génération d'un flux de données côté sortie dans chaque unité de traitement (3₁, 3₂, ..., 3ₙ) à partir d'au moins un flux de données côté entrée délivré à l'unité de traitement respective (3₁, 3₂, ..., 3ₙ),
• échange des flux de données côté sortie et des données d'état générés respectifs dans les unités de traitement (3₁, 3₂, ..., 3ₙ) par l'intermédiaire d'un système de bus (4) côté sortie relié aux unités de traitement (3₁, 3₂, ..., 3ₙ),
• sélection du flux de données côté sortie à transmettre au système émetteur (6) dans chaque unité de traitement (3₁, 3₂, ..., 3ₙ) au moyen d'au moins deux décideurs (7₁, 7₂, ..., 7ₙ ; 7 ; 7₁' ; 7₁", 7₂", ..., 7ₙ") reliés au système de bus côté sortie (4), auquel sont délivrés respectivement tous les flux de données et données d'état générés respectifs dans les différentes unités de traitement (3₁, 3₂, ..., 3ₙ), et
• transmission synchrone du flux de données côté sortie sélectionné respectif pour chaque unité de traitement (3₁, 3₂, ..., 3ₙ) au système émetteur (6), dans lequel les décideurs (7₁ .. 7ₙ) sont utilisées de manière redondante.

15. Procédé selon la revendication 14, **caractérisé en ce que**
la transmission synchrone des différents flux de données côté sortie au système émetteur (6) se produit aux transitions entre des trames de données consécutives respectives des flux de données côté sortie à transmettre de manière synchrone.

16. Procédé selon la revendication 14 ou 15, **caractérisé en ce que**
la transmission synchrone des différents flux de données côté sortie au système émetteur (6) se produit de manière retardée du temps de transmission d'une trame de données.

17. Procédé selon l'une des revendications 14 à 16, **caractérisé en ce que**
la sélection du flux de données côté sortie à transmettre respectivement au système émetteur (6) par l'unité de traitement respective (3₁, 3₂, ..., 3ₙ) se produit selon la disponibilité des flux de données côté sortie à sélectionner respectifs dans l'unité de traitement respective et/ou la conformité des flux de données côté sortie à sélectionner respectifs aux exigences du standard de transmission utilisé respectif et/ou les données d'état caractérisant l'aptitude de l'unité de traitement respective (3₁, 3₂, ..., 3ₙ) et la ligne de transmission respectif (5₁, 5₂, ..., 5ₙ) par l'unité de traitement respective (3₁, 3₂, ..., 3ₙ) vers le système émetteur (6).

18. Procédé selon l'une des revendications 14 à 17, **caractérisé en ce que**
les différentes unités de traitement (3₁, 3₂, ..., 3ₙ) sont alimentées par l'intermédiaire d'un système de bus côté entrée (2) par des flux de données côté entrée identiques générés respectifs par une source de données.

19. Procédé selon la revendication 18, **caractérisé en ce que**
les flux de données côté entrée sont synchronisés au moyen de l'échange de données de synchronisation par l'intermédiaire du système de bus côté entrée (2).

20. Procédé selon l'une des revendications 14 à 19, **caractérisé en ce que**
les flux de données côté sortie sélectionnés et à transmettre au système émetteur (6) sont convertis en un format de données d'un standard de transmission utilisé au moyen d'unités de conversion (10 ; 10₁, 10₂, ..., 10ₙ ; 10₁', 10₂', ..., 10ₙ', 10').
